# EUROPEAN PATENT SPECIFICATION

(11) **EP 2 487 744 B1**
(45) Date of publication and mention of the grant of the patent: **18.11.2015**
(21) Application number: 12154634.5
(22) Date of filing: 09.02.2012
(51) Int. Cl.: H01M 8/04, H01M 8/06, H01M 8/24, H01M 8/12

(54) **Fuel cell system**
Brennstoffzellensystem
Système de pile à combustible

(30) Priority: 10.02.2011 JP 2011026653
(43) Date of publication of application: 15.08.2012
(73) Proprietor: Aisin Seiki Kabushiki Kaisha, Aichi 448-8650 (JP); TOYOTA JIDOSHA KABUSHIKI KAISHA, Toyota-shi, Aichi-ken, 471-8571 (JP)
(72) Inventor: Shinoda, Kazunobu, Kariya-shi,, Aichi 448-8650 (JP)
(74) Representative: TBK

(56) References cited:
- WO-A1-2008/047653
- JP-A- 8 236 133
- JP-A- 2004 259 491

## Description

### TECHNICAL FIELD

The present invention relates to a fuel cell system according to the preamble of claim 1.

### BACKGROUND DISCUSSION

A known rainwater discharging structure of a combustion apparatus is disclosed in JP1998-300237A (hereinafter referred to as Patent reference 1). According to the rainwater discharging structure of the combustion apparatus disclosed in Patent reference 1, condensed water generated at an inside of an exhaust pipe is discharged from a drain hole located at a bottom end of the apparatus via a passage at an inside apparatus, and a means for guiding the condensed water by means of a mat member so that water drops do not spill out or do not adhere to components provided at the inside of the apparatus during a process of discharging the condensed water is provided.

A known exhaust structure of a combustion apparatus is disclosed in JP1998-281559A (hereinafter referred to as Patent reference 2). The known exhaust structure of the combustion apparatus disclosed in Patent reference 2 is provided with a weather board for rainwater restriction which is arranged to have a slope serving as an exhaust pipe. An exhaust passage is divided into two to allow an exhaust gas to be discharged from a rear end and a front end of the weather board so that combustion resonance noise does not occur.

A known exhaust protection cover is disclosed in JP2003-254531A (hereinafter referred to as Patent reference 3). The known exhaust protection cover disclosed in Patent reference 3 includes a structure in which an outer cover is provided so that an exhaust gas is discharged in directions of an upper surface and side surfaces of an exhaust pipe instead of allowing the exhaust gas to be blown in a front direction of the exhaust pipe. A known installation structure of a flow straightening board for a combustion apparatus is disclosed in JP2003-269802A (hereinafter referred to as Patent reference 4). According to the known installation structure of the flow straightening board for the combustion apparatus disclosed in Patent reference 4, a shape of the board inside an exhaust pipe and a method for fixedly attaching the board are simplified. Thus, the installation structure may be implemented in a simple way and be suitable for a mass production.

WO2008/047653A1 (hereinafter referred to as Patent reference 5) discloses a generic fuel cell system having all features of preamble of claim 1. The techniques disclosed in Patent references 1 to 5, however, are not necessarily beneficial for restricting, for example, wind, rainwater or dust that exist at an outside of a housing from entering an inside of an exhaust pipe of the housing.

A need thus exists for a fuel cell system that is beneficial for restricting, for example, the wind, rainwater or dust that exist at the outside of the case from entering the inside of the exhaust pipe of the case by means of a simple structure.

### SUMMARY

It is an object of the present invention to provide a fuel cell system that is beneficial for restricting, for example, the wind, rainwater or dust that exist at the outside of the case from entering the inside of the exhaust pipe of the case by means of simple structure. The object is achieved by a fuel cell system having the features of claim 1. Advantageous further developments are set out in the dependent claims.

According to the above described structure, the protruding end portion of the exhaust pipe includes the wind shield wall extending along the central axis of the protruding end portion of the exhaust pipe and positioned closer to the outside air communication hole than the outlet is positioned, and the outlet is formed to be positioned opposite to the outside air communication hole relative to the central axis. Thus, even in a case where a wind existing at the outside of the case blows into the exhaust chamber of the exhaust box, the wind is blocked by the wind shield wall of the protruding end portion of the exhaust pipe. Accordingly, it is restricted that the wind existing outside excessively enters an inside of the exhaust pipe from the outlet. Similarly, for example, rainwater or dust is restricted from excessively entering the inside of the exhaust pipe from the outlet. As described above, because the wind shield wall is formed against a blowing of the wind existing outside the exhaust pipe by utilizing the wall of the exhaust pipe without using a separate shielding member, thereby contributing a reduction of the number of parts. The fuel cell may be applied to a known fuel cell, such as a solid oxide fuel cell, a polymer electrolyte fuel cell, a molten carbonate fuel cell or a phosphoric acid fuel cell. The fuel cell may be also applied to a gas water heater.

According to the above described structure, it is beneficial for restricting, for example, the wind, the rainwater or the dust that exist at the outside of the case from entering the inside of the exhaust pipe of the case by means of a simple structure.

Preferably, the protruding end portion of the exhaust pipe is arranged along a vertical line, and a peripheral edge of the outlet of the protruding end portion is inclined relative to the vertical line.

According to the above described structure, the wind existing outside of the case is blocked by the wind shield wall of the protruding end portion at the inside of the exhaust box, and thus it is restricted that the wind from the outside enters the inside of the exhaust pipe from the outlet. Further, an opening area of the outlet is secured, thereby ensuring a discharging performance, that is, a performance of the exhaust system to discharge the exhaust gas from the outlet.

Further preferably, the protruding end portion of the exhaust pipe extends from below the exhaust box upwardly to protrude into the inside of the exhaust chamber of the exhaust box.

It is advantageous if a lower end of the outlet formed at the protruding end portion is positioned higher than a bottom surface of the exhaust box by a predetermined height so that a liquid accumulated at the bottom surface is prevented from entering the outlet.

According to the above described structure, the liquid accumulated at the bottom surface of the exhaust box is restricted from entering the inside of the exhaust pipe from the outlet. Where a height of the exhaust chamber of the exhaust box is 100, the predetermined height is, for example, in a range from 2 to 30 or a range from 3 to 10 relative to the height of the exhaust chamber.

Preferably, the outlet of the protruding end portion protrudes upwardly in a manner that the upper peripheral edge of the outlet includes a convex arc-shape curved upwardly when viewed in a sectional view.

Preferably, the outlet of the protruding end portion includes an inclined portion inclined relative to the central axis and a portion extending along the central axis.

Preferably, the protruding end portion includes a rectangular cross-section that is perpendicular to the central axis.

Preferably, the fuel cell system further includes an exhaust cover attached to the exhaust chamber and including a first wall surface facing the wind shield wall and a second wall surface intersecting with the first wall surface, wherein the second wall surface of the exhaust cover is provided with an outside air communication hole formed into a small hole shape.

Preferably, the protruding end portion includes a most distal portion, and a clearance is provided between the most distal portion and an inner wall surface of an upper surface wall of the exhaust box.

According to a further aspect of this disclosure, the exhaust box includes a box body including a wall which faces the outlet and is formed with a first lip edge, and the wall is joined to the box body of the exhaust box via the lip edge.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view which is seen from a lateral direction and illustrates a structure, where a protruding end portion of an exhaust pipe protrudes into an exhaust chamber of an exhaust box, according to a first embodiment disclosed here;
Fig. 2 is a perspective view of the exhaust box including an exhaust cover according to the first embodiment;
Fig. 3 is a projected plan view which is seen from above and illustrates the exhaust box including the exhaust cover according to the first embodiment;
Fig. 4 is a cross-sectional view illustrating a structure where the protruding end portion of the exhaust pipe protrudes into the exhaust chamber of the exhaust box according to a second embodiment disclosed here;
Fig. 5 is a cross-sectional view illustrating a structure, where the protruding end portion of the exhaust pipe protrudes into the exhaust chamber of the exhaust box, according to a third embodiment disclosed here;
Fig. 6 is a cross-sectional view illustrating a structure, where the protruding end portion of the exhaust pipe protrudes into the exhaust chamber of the exhaust box, according to a fourth embodiment disclosed here;
Fig. 7 is a cross-sectional view illustrating a structure, where the protruding end portion of the exhaust pipe protrudes into the exhaust chamber of the exhaust box, according to a fifth embodiment disclosed here;
Fig. 8 is a perspective view of the exhaust box including the exhaust cover according to a sixth embodiment; and
Fig. 9 is a schematic layout of a fuel cell system according to the first embodiment.

### DETAILED DESCRIPTION

### [First embodiment]

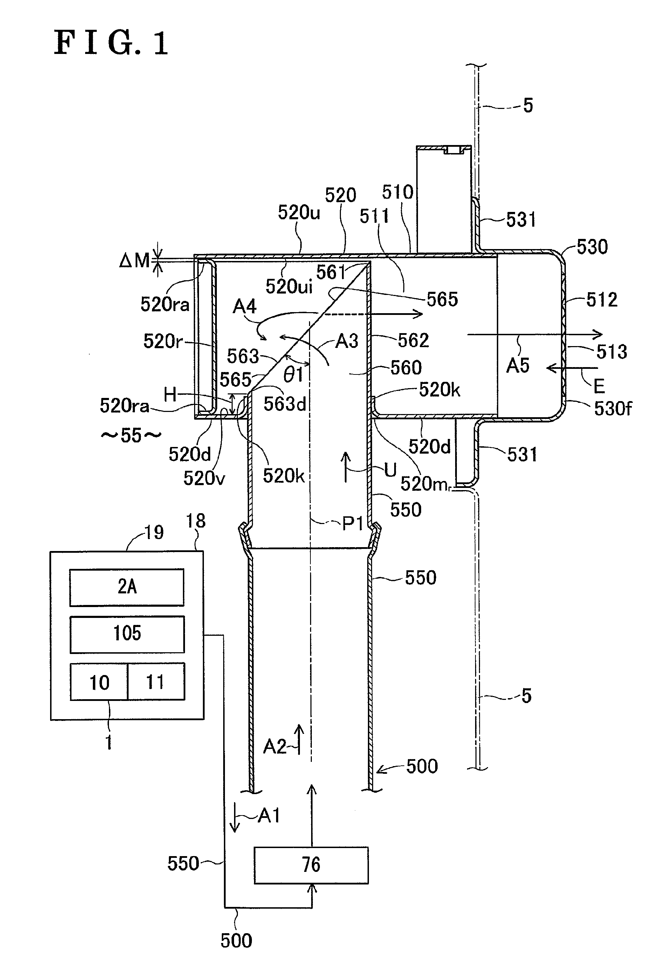

A first embodiment will be explained. As schematically illustrated in Fig. 1, the fuel cell system includes (i) a fuel cell 1, that is, a solid oxide fuel cell, including an anode 10 to which an anode fluid is supplied and a cathode 11 to which a cathode fluid is supplied, (ii) a reformer 2A for forming the anode fluid (a hydrogen containing gas) by reforming the fuel in gas phase or liquid phase by water vapor, (iii) a combusting portion 105 which, as a result of combustion, heats the reformer 2A together with the fuel cell 1 so that the reformer 2A together with the fuel cell 1 are suited for the reforming reaction, (iv) a case 5 including a space 55 accommodating therein the fuel cell 1, the reformer 2A and the combusting portion 105, (v) a module 18 in which the reformer 2A, the combusting portion 105 and the fuel cell 1, each of which may be a heat source, are covered by an insulation wall 19 and (vi) an exhaust system 500 for cooling, via a condenser 76, a high temperature exhaust gas discharged from the module 18 which is an exhaust gas source and then discharging the cooled exhaust gas to an outside air of an outside of the case 5.

Because the exhaust gas is at a higher temperature than the outside air, the exhaust gas is cooled down at the condenser 76, and water vapor included in the exhaust gas is condensed and removed from the exhaust gas at the condenser 76 before the exhaust gas is discharged to the outside of the case 5. The condenser 76 is constituted by a heat exchanger. As a cooling source in the condenser 76, for example, water stored in a hot water storage tank may be used, however, water from another water system or a cooling air flow may be used in some cases. Condensed water generated at the condenser 76 may be utilized as reforming water that becomes the water vapor usable for the steam reforming. The module 18 functions as the exhaust gas source, that is, the module 18 generates the exhaust gas which is discharged from the exhaust system 500.

The reformer 2A has an evaporating function to generate the water vapor by heating the reforming water, and a reforming function to form the anode fluid by reforming the fuel via the reforming reaction. During a power generating operation, the anode fluid (the anode gas constituted by the hydrogen containing gas) generated at the reformer 2A is supplied to the anode 10 of the fuel cell 1 through a passage. The cathode fluid (an oxygen containing gas, for example, air) is supplied to the cathode 11 of the fuel cell 1 by means of a supply source. Thus, the fuel cell 11 performs the power generating operation.

According to the first embodiment, as illustrated in Fig. 1, the exhaust system 500 includes (i) an exhaust box 510 including an exhaust chamber 511 having a hollow configuration, and an outside air communication hole 512 providing communication between the exhaust chamber 511 and the outside air (the outside of the case 5) and (ii) an exhaust pipe 550 including a protruding end portion 560 protruding from an outside of the exhaust box 510 into an inside of the exhaust chamber 511 of the exhaust box 510. The exhaust box 510 and the exhaust pipe 550 are provided at the space 55 of an inside of the case 5. The exhaust box 510 includes a box body 520 forming the exhaust chamber 511 having the hollow configuration and an exhaust cover 530 attached to a front end portion (the end portion positioned on the right side in Fig. 1) of the box body 520.

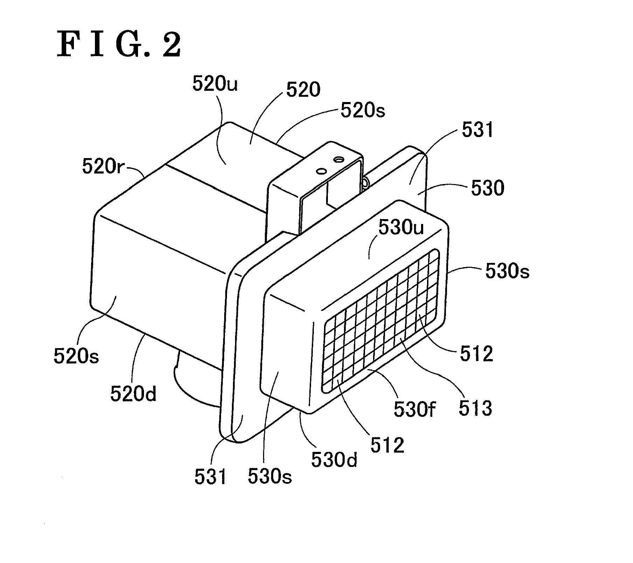

The exhaust cover 530 faces the outside air and is joined to the box body 520 by means of a joint element such as, for example, brazing, welding, a bolt or a rivet. As illustrated in Fig. 2, the box body 520 includes an upper surface wall 520u, a bottom surface wall 520d, side surface walls 520s, a back surface wall 520r (i.e., a wall). A first lip edge 520ra, which is bent in a direction which intersects with the back surface wall 520r and which is away from the protruding end portion 560, is formed at an entire circumference or a part of the circumference of the back surface wall 520r (refer to Fig. 1). The back surface wall 520r is joined to the box body 520 via the first lip edge 520ra by means of, for example, brazing or welding. By providing the first lip edge 520ra, a junction area between the first lip edge 520ra and the exhaust pipe 550 is increased, and a clearance ΔM between the first lip edge 520ra and the upper surface wall 520u remains small and stabilized. Thus, during a brazing procedure, the back surface wall 520r is easily positioned relative to the box body 20, and a joining material such as, for example, a brazing material is easily retained at a surface to be joined during a soldering procedure, resulting that the back surface wall 520r is supported to the box body 520 with an increased strength and that the sealing performance is enhanced. As illustrated in Fig. 1 and as will be described below, the back surface wall 520r faces an outlet 563 of the protruding end portion 560 of the exhaust pipe 550, and therefore the back surface wall 520r is likely to directly receive a pressure of the exhaust gas blown out of the outlet 563. Accordingly, it is effective that strength with which the back surface wall 520r is supported to the box body 520 is increased by the first lip edge 520ra. However, an embodiment in which the back surface wall 520r does not include the first lip edge 520ra may be available.

The exhaust cover 530 includes a front surface wall 530f (i.e., a first wall surface), an upper surface wall 530u (i.e., a second wall surface), a bottom surface wall 530d (i.e., the second wall surface) and side surface walls 530s (i.e., the second wall surfaces). The exhaust cover 530 also includes a flange portion 531 extending outwardly. The outside air communication hole 512 is formed at the front surface wall 530f. A mesh member 513 restricting foreign materials from entering the exhaust box 510 is provided at the outside air communication hole 512.

Fig. 1 is a cross-sectional view illustrating the protruding end portion 560 of the exhaust pipe 550, cut along a vertical direction and viewed from a lateral direction. Because the protruding end portion 560 of the exhaust pipe 550 having a hollow cylindrical shape extends in the vertical direction, it may be considered that a central axis P1 of the protruding end portion 560 corresponds to the vertical direction. In Fig. 1, the protruding end portion 560 of the exhaust pipe 550 includes a wind shield wall 562 extending along the central axis P1 and the outlet 563 from which the exhaust gas is blown out. The wind shield wall 562 is positioned closer to the outside air communication hole 512 than the outlet 563 is positioned, and faces the outside air communication hole 512. On the contrary, the outlet 563 is formed to be positioned opposite to the outside air communication hole 512 relative to the central axis P1. In other words, the outlet 563 faces backward relative to the outside air communication hole 512.

As illustrated in Fig. 1 (the cross-sectional view of the protruding end portion 560 of the exhaust pipe 550 which is viewed from the lateral direction, at the inside of the case 5, the protruding end portion 560 of the exhaust pipe 550 having the hollow cylindrical shape extends from below upwardly along a vertical line so as to enhance a chimney effect. Specifically, the protruding end portion 560 of the exhaust pipe 550 extends from below the exhaust box 510 upwardly (in a direction of an arrow U in Fig. 1) to protrude into the inside of the exhaust chamber 511 of the exhaust box 510. As will be understood from Fig. 1, the bottom surface wall 520d of the box body 520 includes an insertion opening 520m formed in a substantially circular shape so as to penetrate the bottom surface wall 520d. At a peripheral edge of the insertion opening 520m, a second lip edge 520k is formed by a processing method, for example, a burring process, to face upwardly. The protruding end portion 560 of the exhaust pipe 550 is inserted into the exhaust chamber 511 upwardly (in the direction of the arrow U in Fig. 1) while touching the second lip edge 520k.

According to the first embodiment, as illustrated in Fig. 1 (the cross-sectional view viewed from the lateral direction), the protruding end portion 560 is inclined relative to the central axis P1 at an angle θ1 in a manner that the peripheral edge 565 includes the linear portion. Accordingly, during an insertion operation of the protruding end portion 560 into the exhaust chamber 511, the protruding end portion 560 is inserted from the insertion opening 520m into the exhaust chamber 511 upwardly (in the direction of the arrow U in Fig. 1) in a manner that a contact area and an insertion resistance between the protruding end portion 560 and the box body 520 gradually increase as the insertion operation progresses from a beginning to a completion of the insertion. Consequently, an operational performance of inserting the protruding end portion 560 into the insertion opening 520m may be improved. Further, the contact area between the protruding end portion 560 and the second lip edge 520k is ensured in a state where the insertion is completed, thereby improving a supporting strength of the protruding end portion 560 in the exhaust chamber 511. The protruding end portion 560 is joined to the second lip edge 520k by means of brazing or welding so that sealing is provided between the protruding end portion 560 and the second lip edge 520k. However, the second lip edge 520k does not have to be formed at the peripheral edge of the insertion opening 520m in some cases.

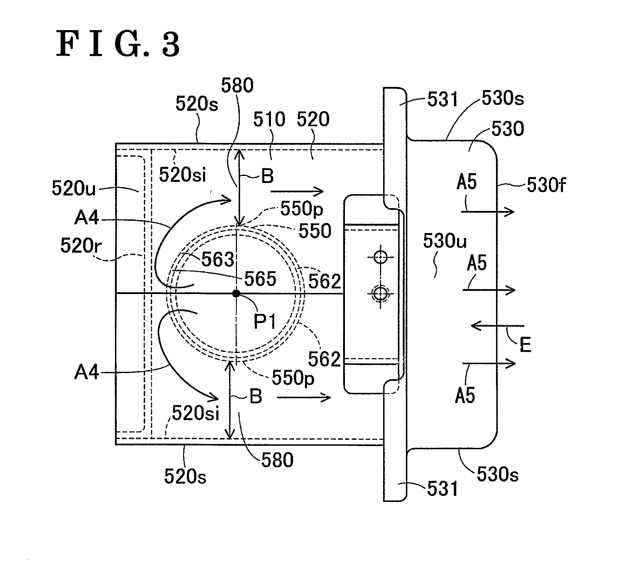

As illustrated in Fig. 1 (the cross-sectional view viewed from the lateral direction), a peripheral edge 565 of the outlet 563 of the protruding end portion 560 is inclined relative to the vertical line, that is, a vertical line (the central axis P1 of the protruding end portion 560) at the angle θ1 in a manner that the peripheral edge 565 includes the linear portion. In this case, a shielding performance of the wind shield wall 562 against the wind entering from the outside into the exhaust chamber 511 increases toward a lower portion of the protruding end portion 560. The protruding end portion 560 includes a most distal portion 561 positioned apart from an inner wall surface 520ui of the upper surface wall 520u of the box body 520 of the exhaust box 510 while leaving the clearance ΔM between the most distal portion 561 and the inner wall surface 520ui. The clearance ΔM works effectively for absorbing thermal expansion of the exhaust pipe 550 and the exhaust box 510, which may enhance durability of the exhaust pipe 550 and the exhaust box 510. However, in some cases, the most distal portion 561 of the protruding end portion 560 may be in contact with the inner wall surface 520ui of the upper surface wall 520u of the box body 520 of the exhaust box 510. Fig. 3 is a projected plan view of the exhaust box 510 viewed from above. As illustrated in Fig. 3, a passage 580 having a space width B is provided between an inner wall surface 520si of each wall surface 520s of the box body 520 of the exhaust box 510 and an outer wall surface 550p of the exhaust pipe 550, thereby ensuring a ventilation performance.

As illustrated in Fig. 1, according to the first embodiment, during the power generating operation of the fuel cell 1, the high temperature exhaust gas (within a range of 200 to 700 °C, for example) generated inside the module 18 flows through the exhaust pipe 550 of the exhaust system 500 in directions of arrows A1 and A2, and then is supplied to the exhaust chamber 511 of the exhaust box 510 from the outlet 563 of the protruding end portion 560 in a direction of an arrow A3. At this time, as will be understood from Fig. 1, at the exhaust chamber 511 of the exhaust box 510, the wind shield wall 562 of the protruding end portion 560 of the exhaust pipe 550 is positioned between the outside air communication hole 512 and the outlet 563. On the contrary, as illustrated in Fig. 1, the outlet 563 does not face the front surface wall 530f of the exhaust cover 530 but faces the back surface wall 520r of the box body 520. In other words, the outlet 563 is directed to a direction opposite to the outside air communication hole 512 of the exhaust cover 530. Accordingly, the exhaust gas discharged from the outlet 563 of the protruding end portion 560 of the exhaust pipe 550 flows toward the back surface wall 520r of the box body 520, however, the exhaust gas then changes a flow direction in a substantially U-shape so as to flow in a direction of an arrow A4 (refer to Fig. 3) toward the outside air communication hole 512, and then is discharged from the outside air communication hole 512 to the outside of the case 5 in a direction of an arrow A5.

The exhaust pipe 550 of the exhaust system 500 discharges the exhaust gas discharged from at least one of the reformer 2A, the combusting portion 105 and the fuel cell 1 (the exhaust gas source) to the outside of the case 5 after the exhaust gas passes through the condenser 76. Accordingly, the exhaust pipe 550 may discharge the exhaust gas discharged from the reformer 2A, from the combusting portion 105, or from the fuel cell 1. That is, the exhaust pipe 550 may discharge the exhaust gas discharged from at least one of the reformer 2A, the combusting portion 105 and the fuel cell 1 to the outside of the case 5.

The water vapor included in the exhaust gas is condensed at the condenser 76 to form the condensed water. The exhaust system 500 discharges the exhaust gas generated during an operation of the fuel cell system to the outside of the case 5. The aforementioned exhaust system 500 includes the exhaust box 510 including the exhaust chamber 511 having the hollow cylindrical configuration and the outside air communication hole 512 providing the communication between the exhaust chamber 511 and the outside air, and the exhaust pipe 550 including the protruding end portion 560 protruding from the outside of the exhaust box 510 into the inside of the exhaust chamber 511 of the exhaust box 510.

According to the first embodiment, as will be understood from Fig. 1, at the exhaust chamber 511 of the exhaust box 510, the wind shield wall 562 of the protruding end portion 560 of the exhaust pipe 550 is positioned between the outside air communication hole 512 and the outlet 563, and the outlet 563 is directed to the direction opposite to the outside air communication hole 512 of the exhaust cover 530. Accordingly, even in a case where the wind existing at the outside of the case 5 blows into the exhaust chamber 511 of the exhaust box 510 from the outside air communication hole 512 in a direction of an arrow E, the wind shield wall 562 of the protruding end portion 560 blocks the wind blown into the exhaust chamber 511 from blowing into the outlet 563. Consequently, the wind existing outside is restricted from entering the inside of the exhaust pipe 550 from the outlet 563. Similarly, for example, the rainwater or the dust existing in the outside air is restricted from entering the inside of the exhaust pipe 550 from the outlet 563 of the protruding end portion 560. Accordingly, the wind shield wall 562 is formed against a blowing of the wind existing outside into the inside of the exhaust pipe 550 by utilizing part of the wall of the exhaust pipe 550 without necessity of an extra shielding member, thereby contributing a reduction of the number of parts. Further, because the peripheral edge 565 of the outlet 563 of the protruding end portion 560 is inclined relative to the vertical line (the central axis P1 of the protruding end portion 560) at the angle θ1, an opening area of the outlet 563 is secured, thereby ensuring a discharging performance from the outlet 563, that is, a performance of the exhaust system 500 to discharge the exhaust gas from the outlet 563.

According to the first embodiment, as illustrated in Fig. 1, a lower end 563d of the outlet 563 formed at the protruding end portion 560 is positioned higher than a bottom surface 520v of the bottom surface wall 520d of the exhaust box 510 by a predetermined height H. In this case, even in a case where liquid is accumulated at the bottom surface 520v of the bottom surface wall 520d of the exhaust box 510, the liquid is restricted from entering the inside of the exhaust pipe 550 from the outlet 563. Where a height of the exhaust chamber 511 of the exhaust box 510 is 100, the predetermined height H is defined, for example, in a range from 2 to 30 or a range from 3 to 10 relative to the height of the exhaust chamber 511. In a case where the liquid enters an inside of the condenser 76, the condensed water generated at the condenser 76 so as to be used as the reforming water may be contaminated, which is not desirable. According to the first embodiment, because the protruding end portion 560 of the exhaust pipe 550 extends in the vertical direction, the central axis P1 of the protruding end portion 560 may be considered to correspond to the vertical direction. However, the protruding end portion 560 of the exhaust pipe 550 may be arranged slightly inclined relative to the vertical direction while extending along the vertical direction in some cases.

### [Second embodiment]

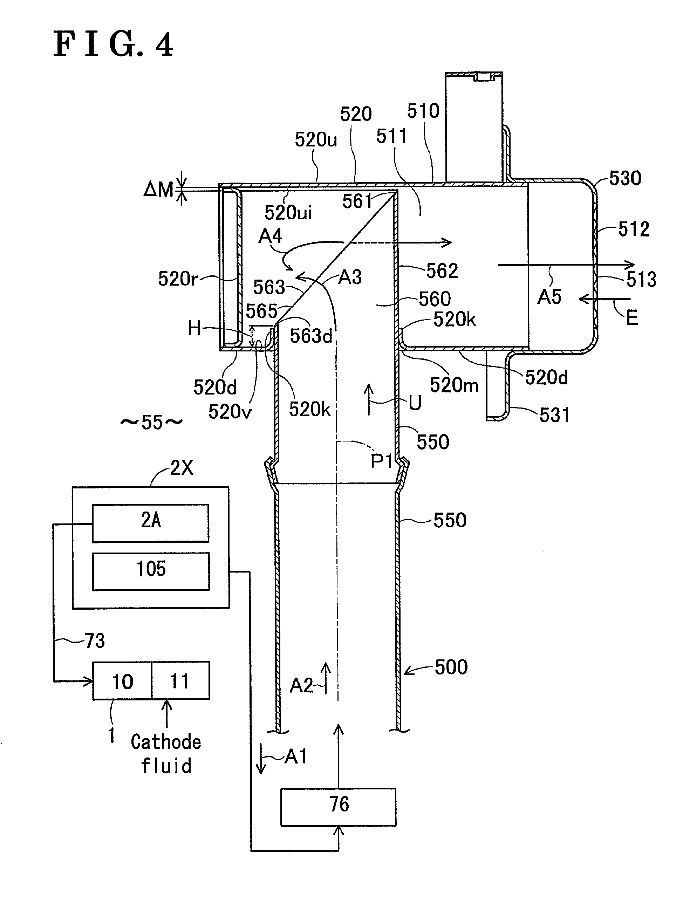

A second embodiment will be explained with reference to Fig. 4. The second embodiment basically includes the same configuration and effect as those of the first embodiment. As schematically illustrated in Fig. 4, the fuel cell system includes the fuel cell 1, that is, a polymer electrolyte fuel cell, including the anode 10 to which the anode fluid is supplied and the cathode 11 to which the cathode fluid is supplied, the reformer 2A for forming the anode fluid by reforming the fuel by the reforming reaction, the combusting portion 105 which, as a result of the combustion, heats at least the reformer 2A so that at least the reformer 2A is suitable for the reforming reaction. The fuel cell 1, that is, the polymer electrolyte fuel cell, includes an electrolyte membrane of, for example, a fluorocarbon system or a hydrocarbon system. The combusting portion 105 and the reformer 2A configure a reforming device 2X.

The reformer 2A has the evaporating function to heat the reforming water and to generate the water vapor, and the reforming function to reform the fuel via the reforming reaction for forming the anode fluid. During the power generating operation, the anode fluid (the anode gas formed by the hydrogen containing gas) generated at the reformer 2A is supplied to the anode 10 of the fuel cell 1 via an anode fluid passage 73. The cathode fluid (the oxygen containing gas, for example, air) is supplied to the cathode 11 of the fuel cell 1 by means of the supply source. Thus, the fuel cell 11 performs the power generating operation.

According to the second embodiment, as illustrated in Fig. 4, the exhaust system 500 includes the exhaust box 510 including the exhaust chamber 511 having the hollow configuration and the outside air communication hole 512 providing the communication between the exhaust chamber 511, and the outside air and the exhaust pipe 550 including the protruding end portion 560 protruding from the outside of the exhaust box 510 into the inside of the exhaust chamber 511 of the exhaust box 510. The exhaust box 510 and the exhaust pipe 550 are provided at the inside of the case 5. The exhaust box 510 includes the box body 520 forming the exhaust chamber 511 having the hollow configuration and the exhaust cover 530 attached to the front end portion (the end portion positioned on the right side in Fig. 1) of the box body 520. The exhaust cover 530 faces the outside air and is joined to the box body 520 by means of the joint element. Fig. 4 is a lateral cross-sectional view of the protruding end portion 560 of the exhaust pipe 550 cut along the vertical direction. In Fig. 4, the protruding end portion 560 of the exhaust pipe 550 includes the wind shield wall 562 extending along the central axis P1 and the outlet 563 from which the exhaust gas is blown out. The wind shield wall 562 is positioned closer to the outside air communication hole 512 than the outlet 563 is positioned, and faces the outside air communication hole 512. On the contrary, the outlet 563 is formed to be positioned opposite to the outside air communication hole 512 relative to the central axis P1. In other words, the outlet 563 faces backward relative to the outside air communication hole 512.

During the power generating operation of the fuel cell 1, the high temperature exhaust gas generated inside the module 18 flows through the exhaust pipe 550 of the exhaust system 500 in directions of the arrows A1 and A2, and then is supplied to the exhaust chamber 511 of the exhaust box 510 from the outlet 563 of the protruding end portion 560 in the direction of the arrow A3. Here, as will be understood from Fig. 4, at the exhaust chamber 511 of the exhaust box 510, the wind shield wall 562 of the protruding end portion 560 of the exhaust pipe 550 is positioned between the outside air communication hole 512 and the outlet 563, and the outlet 563 is directed to the direction opposite to the outside air communication hole 512 of the exhaust cover 530. Accordingly, the exhaust gas discharged from the outlet 563 of the protruding end portion 560 of the exhaust pipe 550 flows toward the back surface wall 520r of the box body 520 of the exhaust box 510, however, the exhaust gas is blocked by the back surface wall 520r and then changes the flow direction in the substantially U-shape so as to flow in the direction of the arrow A4 (refer to Fig. 3) toward the outside air communication hole 512, and then is discharged from the outside air communication hole 512 to the outside of the case 5 in the direction of the arrow A5.

At the exhaust chamber 511 of the exhaust box 510, the wind shield wall 562 of the protruding end portion 560 of the exhaust pipe 550 is positioned between the outside air communication hole 512 and the outlet 563, and the outlet 563 is directed to the direction opposite to the outside air communication hole 512 of the exhaust cover 530. Accordingly, even in a case where the wind existing at the outside of the case 5 blows into the exhaust chamber 511 of the exhaust box 510 from the outside air communication hole 512 in a direction of the arrow E, the wind shield wall 562 of the protruding end portion 560 of the exhaust pipe 550 restricts the wind that is blown into the exhaust chamber 511 from blowing into the outlet 653. Consequently, the wind existing outside is restricted from entering the inside of the exhaust pipe 550 from the outlet 563 of the protruding end portion 560. Similarly, for example, the rainwater or the dust existing in the outside air is restricted from entering the inside of the exhaust pipe 550 from the outlet 563 of the protruding end portion 560. Further, because the peripheral edge 565 of the outlet 563 of the protruding end portion 560 is inclined relative to the vertical line (the central axis P1 of the protruding end portion 560), the opening area of the outlet 563 is secured, thereby ensuring the performance of the exhaust system 500 to discharge the exhaust gas from the outlet 563. Still further, according to the second embodiment, as illustrated in Fig. 4, the lower end 563d of the outlet 563 formed at the protruding end portion 560 is positioned higher than the bottom surface 520v of the exhaust box 510 by the predetermined height H. Thus, even in a case where the liquid is accumulated at the bottom surface 520v of the exhaust box 510, the liquid is restricted from entering the inside of the exhaust pipe 550 from the outlet 563.

### [Third embodiment]

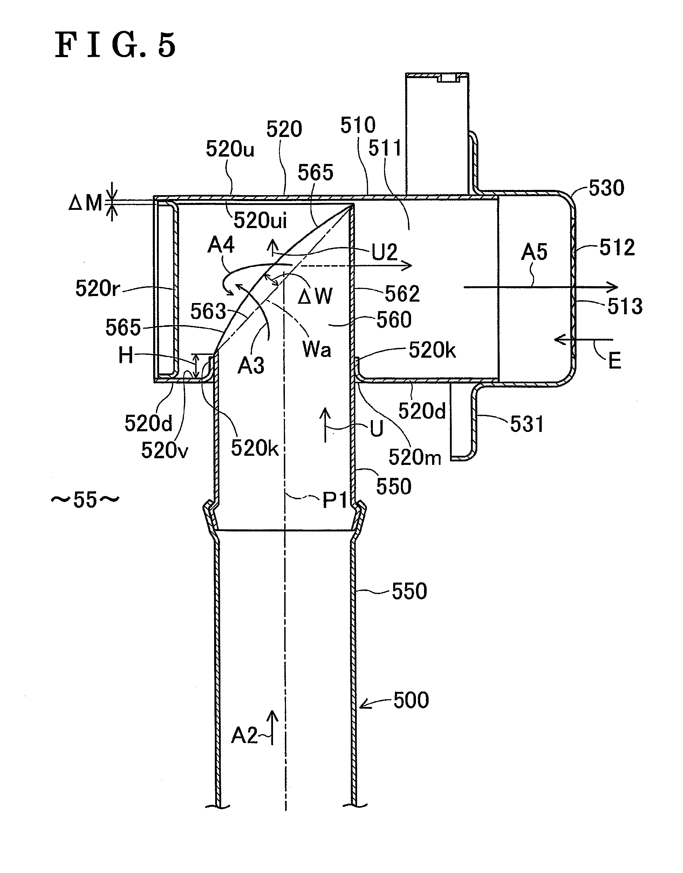

A third embodiment will be explained with reference to Fig. 5. The third embodiment basically includes the same configuration and effect as those of the first and second embodiments. As schematically illustrated in Fig. 5, the peripheral edge 565 of the outlet 563 of the protruding end portion 560 of the exhaust pipe 550 protrudes upwardly (in a direction of an arrow U2) so as to include an arc-shape curved upwardly. In this case, compared to a case where the peripheral edge 565 is inclined so as to include the linear portion as drawn with an imaginary line Wa, a shielding effect increases corresponding to a dimension ΔW. Thus, for example, the wind, the rainwater or the dust existing outside is even further restricted from entering the inside of the exhaust pipe 550.

### [Fourth embodiment]

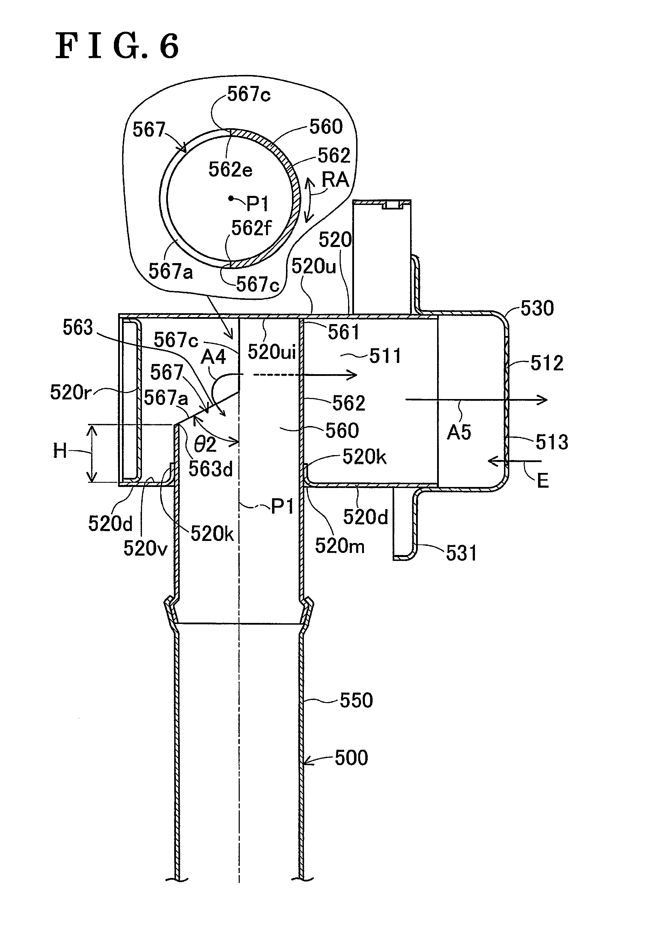

A fourth embodiment will be explained with reference to Fig. 6. The fourth embodiment basically includes the same configuration and effect as those of the first and second embodiments. As schematically illustrated in Fig. 6, a cut-out 567 is formed at the protruding end portion 560 of the exhaust pipe 550. The cut-out 567 includes an inclined portion 567a inclined relative to the vertical direction (the central axis P1 of the protruding end portion 560) at an angle θ2 and a longitudinal portion 567c (i.e., a portion) extending along the vertical direction. The outlet 563 is formed or configured by the cut-out 567. In a projected plan view of the protruding end portion 560, which is seen from above, in Fig. 6, where an entire circumferential length of the protruding end portion 560 is 100 percent, the wind shield wall 562 is provided to extend in an arc-shape along a circumferential direction of the protruding end portion 560 (a direction of an arrow RA) so that a distance between a first end 562e and a second end 562f of the wind shield wall 562, that is, a circumferential length of the wind shield wall 562, accounts for a predetermined value (for example, 30 to 70 percent) of the entire circumferential length of the protruding end portion 560. Further, as illustrated in Fig. 6, the most distal portion 561 of the protruding end portion 560 is in contact with the inner wall surface 520ui of the upper surface wall 520u of the box body 520 of the exhaust box 510. Thus, for example, the wind, the rainwater or the dust existing outside is even further restricted from entering the inside of the exhaust pipe 550 from an inner wall surface 520ui side of the protruding end portion 560. As illustrated in Fig. 6, the lower end 563d of the outlet 563 is positioned further upwardly in the exhaust chamber 511 so as to be positioned higher than a height of the second lip edge 520k from the bottom surface 520v of the bottom surface wall 520d. Thus, the predetermined height H of the lower end 563d of the outlet 563 from the bottom surface 520v is further increased. In this case, the liquid accumulated at the bottom surface 520v is less likely to enter the inside of the exhaust pipe 550.

### [Fifth embodiment]

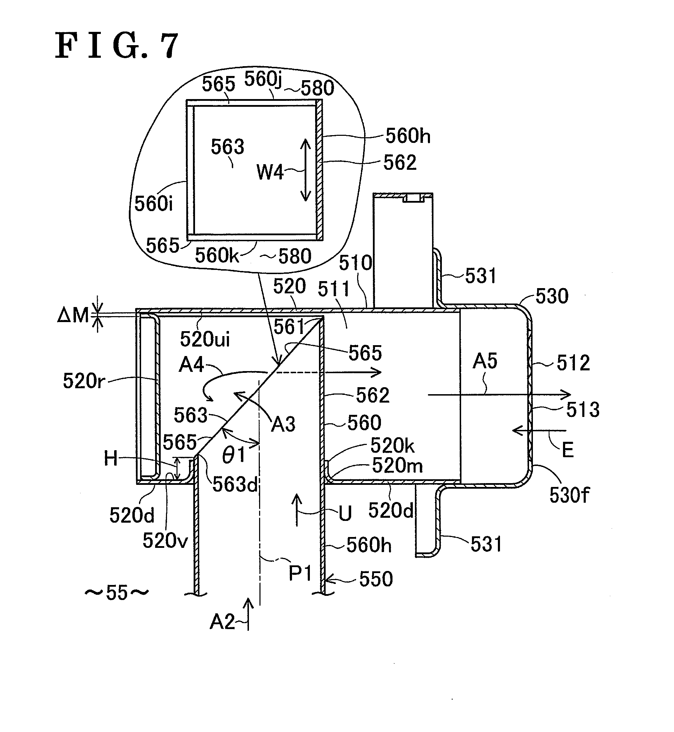

A fifth embodiment will be explained with reference to Fig. 7. The fifth embodiment basically includes the same configuration and effect as those of the first and second embodiments. As schematically illustrated in Fig. 7, the protruding end portion 560 of the exhaust pipe 550 includes a rectangular cross-section perpendicular to the central axis P1. The rectangular cross-section includes side walls 560h, 560i facing each other and side walls 560j, 560k facing each other. The side wall 560h faces the front surface wall 530f of the exhaust cover 530 while being parallel to the front surface wall 530f, and functions as the wind shield wall 562. The side wall 560h, which faces the front surface wall 530f of the exhaust cover 530 so as to be parallel thereto, functions as the wind shield wall 562. The side wall 560h is a linear member extending in a direction of an arrow W4, thereby assuring a shield area against the wind entering the inside of the exhaust chamber 511 in the direction of the arrow E. Other portion of the exhaust pipe 550 than the protruding end portion 560 may include the rectangular cross-section or a circular cross-section.

### [Sixth embodiment]

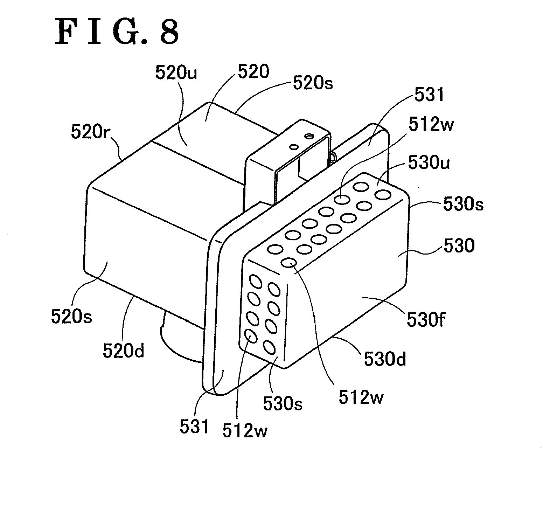

A sixth embodiment will be explained with reference to Fig. 8. The sixth embodiment basically includes the same configuration and effect as those of the first embodiment. As illustrated in Fig. 8, each of the upper surface wall 530u, the bottom surface wall 530d and the side surface walls 530s of the exhaust cover 530 is provided with an outside air communication hole 512w (for example, plural outside air communication holes 512w) each formed into a small hole shape. Because the outside air communication hole 512 is not formed at the front surface wall 530f of the exhaust cover 530, the exhaust gas is restricted from being discharged directly in a front direction of the exhaust cover 530 but is discharged in a dispersed manner, that is, the exhaust gas is discharged in upper, lower, lateral directions, which improves the performance of the exhaust system 500 to discharge the exhaust gas in the dispersed manner. Accordingly, even in a case where a sufficient distance is not provided between the exhaust cover 530 and, for example, a structure such as a building located next to the case 5, the performance to discharge the exhaust gas is assured, and thus a degree of freedom of the fuel cell system is improved from a viewpoint of installation thereof. In the sixth embodiment, for example, the wind, the rainwater or the dust existing outside the exhaust cover 530 is even further restricted from entering the inside of the exhaust pipe 550 via the air communication holes 512w. Further, because the outside air communication hole 512 is not formed at the front surface wall 530f of the exhaust cover 530, it is even further restricted that the wind blows from outside into the exhaust pipe 550.

### [First form of application]

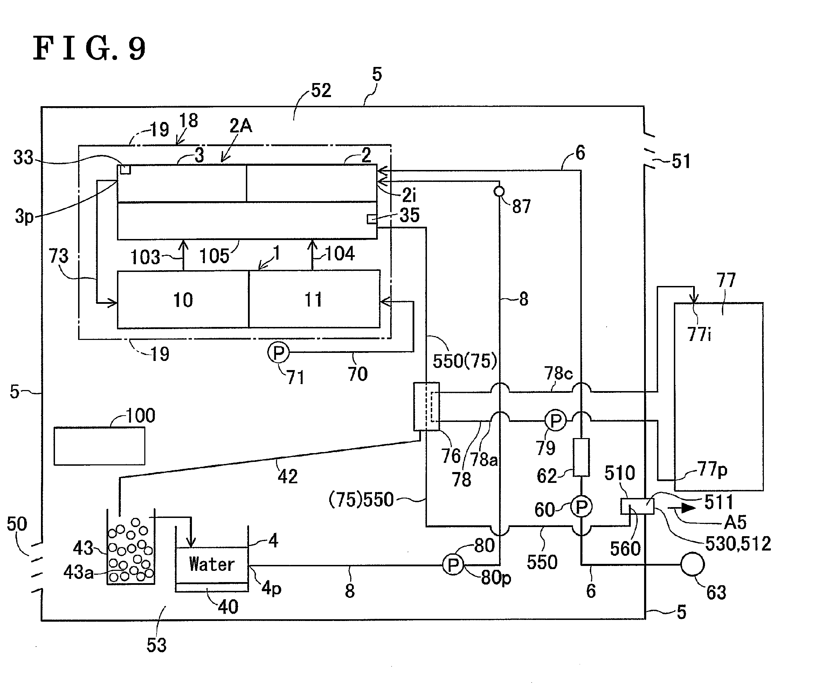

A first form of application will be explained with reference to Fig. 9. As illustrated in Fig. 9, the fuel cell system includes a fuel cell stack constituted by the fuel cell 1, an evaporating portion 2 evaporating water in liquid phase so as to generate the water vapor, a reforming portion 3 reforming fuel by using the water vapor generated at the evaporating portion 2 so as to form the anode fluid, a tank 4 storing the water in the liquid phase supplied to the evaporating portion 2, and the case 5 serving as a housing and accommodating the fuel cell 1, the evaporating portion 2, the reforming portion 3, and the tank 4. The reforming portion 3 includes a temperature sensor 33. The fuel cell stack constituted by the fuel cell 1 includes the anode (a fuel electrode) 10 and the cathode (an oxidizing agent electrode) 11 sandwiching therebetween an ionic conductor. For example, a solid oxide fuel cell (SOFC; an operation temperature is equal to or greater than 400 °C, for example) is applicable to the fuel cell 1. The reforming portion 3 is formed by a carrier such as ceramics, which is formed with plural gas passages and on which a reforming catalyst is carried, and is arranged next to the evaporating portion 2. The reforming portion 3 and the evaporating portion 2 constitute the reformer 2A. The reformer 2A and the fuel cell 1 are surrounded by the insulation wall 19 to thereby form the module 18.

In the power generating operation of the fuel cell system (the fuel cell 1), the reformer 2A is heated up inside the insulation wall 19 so as to be suitable for the reforming reaction. In the power generating operation, the evaporating portion 2 is heated up at the combusting portion 105 so as to heat a reforming water to obtain the water vapor. In a case where the fuel cell 1 is the SOFC, an anode off-gas containing hydrogen is burnt at the combusting portion 105, and thereby the anode 10 and the cathode 11 of the fuel cell 1 are heated up. As a result, the reforming portion 3 and the evaporating portion 2 are heated up at the same time. A fuel passage 6 through which the fuel from a fuel source 63 is supplied to the reformer 2A includes a fuel pump 60 and a desulfurizer 62. A cathode gas passage 70 is connected to the cathode 11 of the fuel cell 1 so as to supply a cathode gas (air) to the cathode 11. A cathode pump 71 is provided at the cathode gas passage 70 so as to function as the supply source transmitting the cathode gas.

As illustrated in Fig. 9, the case 5 includes an intake port 50 and an exhaust port 51 that is in communication with the outside air. Further, the case 5 includes an upper accommodation chamber 52 provided at an upper side of the case 5 and serving as a first chamber, and a lower accommodation chamber 53 provided at a lower side of the case 5 and serving as a second chamber. The fuel cell 1, the reforming portion 3, and the evaporating portion 2 are accommodated in the upper accommodation chamber 52. The tank 4 storing the water that is in the liquid phase and is reformed at the reforming portion 3 is accommodated in the lower accommodation chamber 53 of the case 5. A heating portion 40 such as an electric heater having a heating function is provided at the tank 4. The heating portion 40 formed by the electric heater, for example, heats up the water stored in the tank 4. In a case, for example, where an ambient temperature such as an outside air temperature is low, the water in the tank 4 is heated up by the heating portion 40 based on a command from a control portion 100 to thereby avoid freezing. The water level in the tank 4 may be desirably basically constant. As illustrated in Fig. 9, a water supply passage 8 serving as a conduit is provided within the case 5 so as to connect an outlet port 4p of the tank 4 in the lower accommodation chamber 53 to an inlet port 2i of the evaporating portion 2 in the upper accommodation chamber 52. The water supply passage 8 is a passage through which the water stored in the tank 4 is supplied from the outlet port 4p of the tank 4 to the inlet port 2i of the evaporating portion 2. A water pump 80 functioning as a water supply source is provided at the water supply passage 8 so as to send the water in the tank 4 to the evaporating portion 2. The water supply passage 8 is connected to the outside air via the evaporating portion 2, the reforming portion 3, and the fuel cell stack 12. The control portion 100 controls the water pump 80, the cathode pump 71, a hot water storage pump 79 (to be explained later), and the fuel pump 60.

In a case where the fuel pump 60 is driven at the start of the fuel cell system, the fuel flows through the fuel passage 6 to the evaporating portion 2, the reforming portion 3, the anode fluid passage 73, the anode 10 of the fuel cell 1, a first fluid passage 103, and the combusting portion 105. In addition, the cathode fluid (air) flows from the cathode pump 71 to the cathode fluid passage 70, the cathode 11 of the fuel cell 1, a second fluid passage 104, and the combusting portion 105. When the ignition portion 35 is ignited in the aforementioned state, the combustion occurs at the combusting portion 105 so as to heat up the reforming portion 3 and the evaporating portion 2. In a case where the pump 80 is driven while the reforming portion 3 and the evaporating portion 2 are heated up, the water in the tank 4 is sent from the outlet port 4p to the inlet port 2i of the evaporating portion 2 through the water supply passage 8. The water is then heated at the evaporating portion 2 to form the water vapor. The water vapor moves to the reforming portion 3 together with the fuel supplied from the fuel passage 6 by the driving of the pump 60. At this time, the gaseous fuel is desirable; however, the liquid fuel may be acceptable in some cases. The fuel in the reforming portion 3 is reformed by the water vapor so as to form the anode fluid (the hydrogen containing gas). The anode fluid is supplied to the anode 10 of the fuel cell 1 via the anode fluid passage 73. Further, the cathode fluid (the oxygen containing gas or an oxygen gas, i.e., air in the case 5) is supplied to the cathode 11 of the fuel cell 1 via the cathode fluid passage 70. As a result, the fuel cell 1 generates an electric power. The anode off-gas discharged from the anode 10 and a cathode off-gas discharged from the cathode 11 flow through the first and second fluid passages 103 and 104 respectively and reach the combusting portion 105 so as to be burnt at the combusting portion 105. The resulting high temperature exhaust gas generated in the module 18 is emitted to the outside of the case 5 via the exhaust pipe 550 constituting an exhaust gas passage 75. In a case where the fuel is a methane fuel, the generation of the anode gas by the reforming using the water vapor is considered to occur on a basis of a formula (1) below. At this time, however, the fuel is not limited to the methane fuel.

(1) CH₄ + 2H₂O → 4H₂ + CO₂ CH₄ + H₂O → 3H₂ + CO

The anode gas is supplied from an outlet port 3p of the reforming portion 3 to the anode 10 of the fuel cell 1 via the anode fluid passage 73. Further, the cathode gas (the oxygen containing gas, i.e., the air in the case 5) is supplied to the cathode 11 of the fuel cell 1 by the driving of the pump 71 via the cathode fluid passage 70. A power generation reaction occurs at the fuel cell 1 in the aforementioned state. In the aforementioned power generation reaction, it is basically considered that a reaction of a formula (2) occurs at the anode 10 supplied with the hydrogen containing gas as the anode gas. In addition, it is basically considered that a reaction of a formula (3) occurs at the cathode 11 supplied with the air (oxygen) as the cathode gas. Oxygen ion (O²⁻) generated at the cathode 11 conducts electrolyte from the cathode 11 to the anode 10 in a thickness direction of the cathode 11.

(2) H₂ + O²⁻ → H₂O + 2e⁻

In a case where CO is contained: CO + O²⁻ → CO₂ + 2e⁻

(3) 1/2O₂ + 2e⁻ → O²⁻

The anode off-gas after the power generation reaction includes hydrogen that has not been used in the power generation reaction. The cathode off-gas includes unreacted oxygen in the power generation reaction. The anode off-gas and the cathode off-gas are discharged to the combusting portion 105 and are burnt thereat. The anode off-gas and the cathode off-gas after being burnt are formed into the exhaust gas. The exhaust gas, which flows through the exhaust pipe 550 via the condenser 76, is emitted from the protruding end portion 560 of the exhaust pipe 550 to the outside of the case 5 via the exhaust chamber 511 and the outside air communication hole 512 of the exhaust box 510.

As illustrated in Fig. 9, the condenser 76 constituted by the heat exchanger is provided at the exhaust pipe 550 that constitutes the exhaust combustion gas passage 75. A hot water storage passage 78 connected to a hot water storage tank 77 is connected to the condenser 76. The hot water storage pump 79 is provided at the hot water storage passage 78. The hot water storage passage 78 includes an outward passage 78a and an inward passage 78c. A low temperature water in the hot water storage tank 77 is discharged from a discharge port 77p of the hot water storage tank 77 by the driving of the hot water storage pump 79 so as to flow through the outward passage 78a to the condenser 76 and is heated thereat. The water heated by the condenser 76 is returned to the hot water storage tank 77 from a return port 77i by flowing through the inward passage 78c. Accordingly, the hot water is obtained at the hot water storage tank 77. The water vapor included in the aforementioned exhaust gas from the fuel cell 1 is condensed at the condenser 76 to form the condensed water. The condensed water is supplied to a purification portion 43 due to, for example, the effect of gravity or outside wind, via a condensation water passage 42 extending from the condenser 76. Because the purification portion 43 includes a water purifier 43a such as an ion-exchange resin, an impure substance contained in the condensed water is removed. The water where the impure substance is removed moves to the tank 4 and is stored thereat. When the pump 80 is driven, the water in the tank 4 is discharged from a port 80p of the water pump 80 and is supplied to the evaporating portion 2 at the high temperature via the water supply passage 8 via a water sensor 87, and is then supplied to the reforming portion 3 after the water turns to the water vapor at the evaporating portion 2. The water (water vapor) is consumed at the reforming portion 3 in the reforming reaction for reforming the fuel.

According to the first form of application, main portions of the fuel cell system include the same configuration as those of the first to sixth embodiments illustrated in Figs. 1 to 7. Specifically, at the inside of the case 5, the protruding end portion 560 of the exhaust pipe 550 extends from below the exhaust box 510 upwardly to protrude into the inside of the exhaust chamber 511 of the exhaust box 510. According to the first form of application, as illustrated in, for example, Fig. 1, the protruding end portion 560 of the exhaust pipe 550 includes the wind shield wall 562 extending along the central axis P1 of the exhaust pipe 550 and the outlet 563 from which the exhaust gas is blown out. The wind shield wall 562 is positioned closer to the outside air communication hole 512 formed at the exhaust cover 300 of the exhaust box 510 than the outlet 563 is positioned, and faces the outside air communication hole 512. The outlet 563 is formed to be positioned opposite to the outside air communication hole 512 relative to the central axis P1. In other words, the outlet 563 faces backward relative to the outside air communication hole 512.

As will be understood from Fig. 1, at the exhaust chamber 511 of the exhaust box 510, the wind shield wall 562 of the protruding end portion 560 of the exhaust pipe 550 is positioned between the outside air communication hole 512 and the outlet 563. The outlet 563 is directed to the direction opposite to the outside air communication hole 512 of the exhaust cover 530. Accordingly, even in a case where the wind existing at the outside of the case 5 blows into the exhaust chamber 511 of the exhaust box 510 from the outside air communication hole 512, the wind shield wall 562 of the protruding end portion 560 of the exhaust pipe 550 blocks the wind from blowing into the outlet 563. Consequently, the wind existing outside is restricted from entering the inside of the exhaust pipe 550 from the outlet 563. Similarly, for example, the rainwater or the dust existing in the outside air is restricted from entering the inside of the exhaust pipe 550 from the outlet 563 of the protruding end portion 560. Further, because the peripheral edge 565 of the outlet 563 of the protruding end portion 560 is inclined relative to the vertical line, the opening area of the outlet 563 is secured, thereby ensuring the discharging performance from the outlet 563.

The aforementioned first to sixth embodiments may be appropriately changed or modified. For example, the exhaust pipe 550 may be formed into a hollow rectangular column shape instead of the hollow cylindrical shape. A blowing source including, for example, a blower and a fan, may be used as the supply source transmitting the cathode fluid instead of the pump. That is, any types of supply sources transmitting the cathode fluid are applicable as long as the cathode fluid is transmitted to the cathode 11. The heating portion 40 is provided at the tank 4 according to the first to sixth embodiments. Alternatively, the fuel cell system does not need to include the heating portion 40. The fuel cell 1 according to the first to sixth embodiments may be applied to the solid oxide fuel cell, the polymer electrolyte fuel cell, a molten carbonate fuel cell or a phosphoric acid fuel cell. Alternatively, the fuel cell 1 may be applied to a gas water heater in some cases. As the fuel for the fuel cell system, city gas, LPG (liquefied petroleum gas), biogas, gasoline, kerosene or alcohol may be used. The following technical idea may be grasped.

According to the aforementioned embodiments, an exhaust gas exhaust system includes the case 5 accommodating the exhaust gas source 18, and the exhaust system 500 discharging, via the condenser 76, the exhaust gas discharged from the exhaust gas source 18 to the outside of the case 5, wherein the exhaust system 500 includes the exhaust box 510 and the exhaust pipe 550, the exhaust box 510 includes the exhaust chamber 511 provided at the inside of the case 5 while having the hollow shape and the outside air communication hole 512 providing communication between the exhaust chamber 511 and the outside air, and the exhaust pipe 550 includes the protruding end portion 560 protruding from the outside of the exhaust box 510 into the inside of the exhaust chamber 511 of the exhaust box 510 at the inside of the case 5, and the protruding end portion 560 of the exhaust pipe 550 includes the wind shield wall 562 extending along the central axis P1 of the protruding end portion 560 of the exhaust pipe 550 and the outlet 563 from which the exhaust gas is blown out to the outside air, the wind shield wall 562 is positioned closer to the outside air communication hole 512 than the outlet 563 is positioned, and the outlet 563 is positioned opposite to the outside air communication hole 512 relative to the central axis P1.

According to the aforementioned embodiments, an exhaust gas exhaust system includes the case 5 accommodating the exhaust gas source 18, and the exhaust system 500 discharging the exhaust gas discharged from the exhaust gas source 18 to the outside of the case 5, wherein the exhaust system 500 includes the exhaust box 510 and the exhaust pipe 550, the exhaust box 510 includes the exhaust chamber 511 provided at the inside of the case 5 while having the hollow shape and the outside air communication hole 512 providing communication between the exhaust chamber 511 and the outside air, and the exhaust pipe 550 includes the protruding end portion 560 protruding from the outside of the exhaust box 510 into the inside of the exhaust chamber 511 of the exhaust box 510 at the inside of the case 5, and the protruding end portion 560 of the exhaust pipe 550 includes the wind shield wall 562 extending along the central axis P1 of the protruding end portion 560 of the exhaust pipe 550 and the outlet 563 from which the exhaust gas is blown out to the outside air, the wind shield wall 562 is positioned closer to the outside air communication hole 512 than the outlet 563 is positioned, and the outlet 563 is positioned opposite to the outside air communication hole 512 relative to the central axis P1.

## Claims

1. A fuel cell system comprising:
a fuel cell (1) including an anode (10) to which an anode fluid is supplied and a cathode (11) to which a cathode fluid is supplied;
a reformer (2A) forming the anode fluid by reforming a fuel through a reforming reaction;
a combusting portion (105) heating at least the reformer (2A) through a combustion in a manner that the reformer (2A) forms the anode fluid by reforming the fuel through the reforming reaction;
a case (5) accommodating the fuel cell (1), the reformer (2A) and the combusting portion (105); and
an exhaust system (500) discharging an exhaust gas discharged from at least one of the reformer (2A), the combusting portion (105) and the fuel cell (1) to an outside of the case (5) via a condenser (76), wherein
the exhaust system (500) includes an exhaust box (510) and an exhaust pipe (550), the exhaust box (500) includes an exhaust chamber (511) provided at an inside of the case (5) while having a hollow shape and an outside air communication hole (512) providing communication between the exhaust chamber (511) and an outside air,
**characterized in that**
the exhaust pipe (550) includes a protruding end portion (560) protruding from an outside of the exhaust box (510) into an inside of the exhaust chamber (511) of the exhaust box (510) at the inside of the case (5), wherein
the protruding end portion (560) of the exhaust pipe (550) includes a wind shield wall (562) extending along a central axis (P1) of the protruding end portion (560) of the exhaust pipe (550) and an outlet (563) from which the exhaust gas is blown out to the outside air, the wind shield wall (562) is positioned between the outside air communication hole (512) and the outlet (563), and the outlet (563) is directed to a direction opposite to the outside air communication hole (512).

2. The fuel cell system according to claim 1, wherein the protruding end portion (560) of the exhaust pipe (550) is arranged along a vertical line, and a peripheral edge (565) of the outlet (563) of the protruding end portion (560) is inclined relative to the vertical line.

3. The fuel cell system according to either claim 1 or 2, wherein the protruding end portion (560) of the exhaust pipe (550) extends from below the exhaust box (510) upwardly to protrude into the inside of the exhaust chamber (511) of the exhaust box (510)

4. The fuel cell system according to claim 3, wherein a lower end (563d) of the outlet (563) formed at the protruding end portion (560) is positioned higher than a bottom surface (520v) of the exhaust box (510) by a predetermined height (H) so that a liquid accumulated at the bottom surface (520v) is prevented from entering the outlet (563).

5. The fuel cell system according to any one of claims 1 through 4, wherein the outlet (563) of the protruding end portion (560) protrudes upwardly in a manner that an upper peripheral edge (565) of the outlet (563) includes a convex arc-shape curved upwardly when viewed in a sectional view.

6. The fuel cell system according to any one of claims 1 and 3 through 5, wherein the outlet (563) of the protruding end portion (560) includes an inclined portion (567a) inclined relative to the central axis (P1) and a portion (567c) extending along the central axis (P1).

7. The fuel cell system according to any one of claims 1 through 6, wherein the protruding end portion (560) includes a rectangular cross-section that is perpendicular to the central axis (P1).

8. The fuel cell system according to any one of claims 1 through 7, further comprising:
an exhaust cover (530) attached to the exhaust chamber (511) and including a first wall surface (530f) facing the wind shield wall (562) and a second wall surface (530d, 530s, 530u) intersecting with the first wall surface (530f), wherein
the second wall surface (530d, 530s, 530u) of the exhaust cover (530) is provided with an outside air communication hole (512w) formed into a small hole shape.

9. The fuel cell system according to any one of claims 1 through 8, wherein the protruding end portion (560) includes a most distal portion (561), and a clearance ([Delta]M) is provided between the most distal portion (561) and an inner wall surface (520ui) of an upper surface wall (520u) of the exhaust box (510).

10. The fuel cell system according to any one of claims 1 through 9, wherein
the exhaust box (510) includes a box body (520) including a wall (520r) which faces the outlet (563) and is formed with a first lip edge (520ra), and
the wall (520r) is joined to the box body (520) of the exhaust box (510) via the lip edge (520ra).

## Patentansprüche

1. Brennstoffzellensystem, das Folgendes aufweist:
eine Brennstoffzelle (1), die eine Anode (10), zu der ein Anodenfluid zugeführt wird, und eine Kathode (11) umfasst, zu der ein Kathodenfluid zugeführt wird;
einen Reformer (2A), der das Anodenfluid durch eine Reformierung eines Brennstoffs durch eine Reformierungsreaktion bildet;
einen Verbrennungsabschnitt (105), der mindestens den Reformer (2A) durch eine Verbrennung in einer Weise erwärmt, dass der Reformer (2A) das Anodenfluid durch eine Reformierung des Brennstoffs durch die Reformierungsreaktion bildet;
ein Gehäuse (5), das die Brennstoffzelle (1), den Reformer (2A) und den Verbrennungsabschnitt (105) aufnimmt; und
ein Abgassystem (500), das ein Abgas, das von mindestens einem von dem Reformer (2A), dem Verbrennungsabschnitt (105) und der Brennstoffzelle (1) abgegeben wird, zu einem Äußeren des Gehäuses (5) über einen Kondensator (76) abgibt, wobei
das Abgassystem (500) einen Abgaskasten (510) und ein Abgasrohr (550) umfasst, wobei der Abgaskasten (510) eine Abgaskammer (511), die an einer Innenseite das Gehäuses (5) vorgesehen ist und dabei eine Hohlform hat, und ein Außenluftverbindungsloch (512) umfasst, das eine Verbindung zwischen der Abgaskammer (511) und einer Außenluft vorsieht,
**dadurch gekennzeichnet, dass**
das Abgasrohr (550) einen vorstehenden Endabschnitt (560) umfasst, der von einem Äußeren des Abgaskastens (510) in ein Inneres der Abgaskammer (511) des Abgaskastens (510) an der Innenseite des Gehäuses (5) vorsteht, wobei
der vorstehende Endabschnitt (560) des Abgasrohrs (550) eine Windschutzwand (562), die sich entlang einer Mittelachse (P1) des vorstehenden Endabschnitts (560) des Abgasrohrs (550) erstreckt, und einen Auslass (563) umfasst, von dem das Abgas zu der Außenluft ausgeblasen wird, wobei die Windschutzwand (562) zwischen dem Außenluftverbindungsloch (512) und dem Auslass positioniert ist, und der Auslass (563) in eine dem Außenluftverbindungsloch (512) entgegengesetzte Richtung gerichtet ist.

2. Brennstoffzellensystem gemäß Anspruch 1, wobei der vorstehende Endabschnitt (560) des Abgasrohrs (550) entlang einer vertikalen Linie angeordnet ist und ein Umfangsrand (565) des Auslasses (563) des vorstehenden Endabschnitts (560) relativ zu der vertikalen Linie geneigt ist.

3. Brennstoffzellensystem entweder gemäß Anspruch 1 oder 2, wobei sich der vorstehende Endabschnitt (560) des Abgasrohrs (550) von unterhalb der Abgasbox (510) nach oben erstreckt, um in das Innere der Abgaskammer (511) des Abgaskastens (510) vorzustehen.

4. Brennstoffzellensystem gemäß Anspruch 3, wobei ein unteres Ende (563d) des Auslasses (563), das an dem vorstehenden Endabschnitt gebildet ist, um eine vorbestimmte Höhe (H) höher als eine Bodenfläche (520v) des Abgaskastens (510) positioniert ist, sodass eine Flüssigkeit, die an der Bodenfläche (520v) angesammelt ist, vom Eindringen in den Auslass (563) gehindert ist.

5. Brennstoffzellensystem gemäß einem der Ansprüche 1 bis 4, wobei der Auslass (563) des vorstehenden Endabschnitts (560) in einer Weise nach oben vorsteht, dass ein oberer Umfangsrand (565) des Auslasses (563) eine konvexe Bogenform umfasst, die in einer Schnittansicht gesehen aufwärts gekrümmt ist.

6. Brennstoffzellensystem gemäß einem der Ansprüche 1 und 3 bis 5, wobei der Auslass (563) des vorstehenden Endabschnitts (560) einen geneigten Abschnitt (567a), der relativ zu der Mittelachse (P1) geneigt ist, und einen Abschnitt (567c) umfasst, der sich entlang der Mittelachse (P1) erstreckt.

7. Brennstoffzellensystem gemäß einem der Ansprüche 1 bis 6, wobei der vorstehende Endabschnitt (560) einen rechteckigen Querschnitt umfasst, der senkrecht zu der Mittelachse (P1) ist.

8. Brennstoffzellensystem gemäß einem der Ansprüche 1 bis 7, des Weiteren mit:
einer Abgasabdeckung (530), die an der Abgaskammer (511) angebracht ist und eine erste Wandfläche (530f), die der Windschutzwand (562) zugewandt ist, und eine zweite Wandfläche (530d, 530s, 530u) umfasst, die die ersten Wandfläche (530f) schneidet, wobei
die zweite Wandfläche (530d, 530s, 530u) der Abgasabdeckung (530) mit einem Außenluftverbindungsloch (512w) versehen ist, das in einer Form eines kleinen Loches ausgebildet ist.

9. Brennstoffzellensystem gemäß einem der Ansprüche 1 bis 8, wobei der vorstehende Endabschnitt (560) einen am weitesten entfernten Abschnitt (561) umfasst und ein Freiraum ([Delta]M) zwischen dem am weitesten entfernten Abschnitt (561) und einer inneren Wandfläche (520ui) von einer oberen Wandfläche (520u) des Abgaskastens (510) vorgesehen ist.

10. Brennstoffzellensystem gemäß einem der Ansprüche 1 bis 9, wobei
der Abgaskasten (510) einen Kastenkörper (520) umfasst, der eine Wand (520r) umfasst, die dem Auslass (563) zugewandt ist und mit einem ersten Lippenrand (520ra) gebildet ist, und
die Wand (520r) über dem Lippenrand (520ra) mit dem Kastenkörper (520) des Abgaskastens (510) verbunden ist.

## Revendications

1. Système de pile à combustible comprenant :
une pile à combustible (1) incluant une anode (10) à laquelle un fluide d'anode est alimenté et une cathode (11) à laquelle un fluide de cathode est alimenté ;
un reformeur (2A) formant le fluide d'anode en reformant un combustible à travers une réaction de reformage ;
une partie de combustion (105) chauffant au moins le reformeur (2A) à travers une combustion d'une manière que le reformeur (2A) forme le fluide d'anode en reformant le combustible à travers la réaction de reformage ;
un boîtier (5) logeant la pile à combustible (1), le reformeur (2A) et la partie de combustion (105) ; et
un système d'échappement (500) déchargeant un gaz d'échappement déchargé à partir d'au moins l'un du reformeur (2A), de la partie de combustion (105) et de la pile à combustible (1) vers un extérieur du boîtier (5) via un condensateur (76), dans lequel
le système d'échappement (500) inclut une boîte d'échappement (510) et un tuyau d'échappement (550), la boîte d'échappement (500) inclut une chambre d'échappement (511) prévue dans un intérieur du boîtier (5) tout en ayant une forme creuse et un trou de communication d'air extérieur (512) permettant une communication entre la chambre d'échappement (511) et un air extérieur,
**caractérisé en ce que**
le tuyau d'échappement (550) inclut une partie d'extrémité saillante (560) faisant saillie depuis un extérieur de la boîte d'échappement (510) dans un intérieur de la chambre d'échappement (511) de la boîte d'échappement (510) à l'intérieur du boîtier (5), dans lequel
la partie d'extrémité saillante (560) du tuyau d'échappement (550) inclut un mur paravent (562) s'étendant le long d'un axe central (P1) de la partie d'extrémité saillante (560) du tuyau d'échappement (550) et un orifice de sortie (563) depuis lequel le gaz d'échappement est soufflé à l'air extérieur, le mur paravent (562) est positionné entre le trou de communication d'air extérieur (512) et l'orifice de sortie (563), et l'orifice de sortie (563) est dirigé à une direction opposée au trou de communication d'air extérieur (512).

2. Système de pile à combustible selon la revendication 1, dans lequel la partie d'extrémité saillante (560) du tuyau d'échappement (550) est arrangée le long d'une ligne verticale, et un bord périphérique (565) de l'orifice de sortie (563) de la partie d'extrémité saillante (560) est incliné par rapport à la ligne verticale.

3. Système de pile à combustible selon la revendication 1 ou 2, dans lequel la partie d'extrémité saillante (560) du tuyau d'échappement (550) s'étend depuis dessous la boîte d'échappement (510) vers le haut pour faire saillie dans l'intérieur de la chambre d'échappement (511) de la boîte d'échappement (510).

4. Système de pile à combustible selon la revendication 3, dans lequel une extrémité plus basse (563d) de l'orifice de sortie (563) formé à la partie d'extrémité saillante (560) est positionnée plus haut qu'une surface inférieure (520v) de la boîte d'échappement (510) à une hauteur prédéterminée (H) de sorte qu'un liquide accumulé à la surface inférieure (520v) est empêché de rentrer dans l'orifice de sortie (563).

5. Système de pile à combustible selon l'une quelconque des revendications 1 à 4, dans lequel l'orifice de sortie (563) de la partie d'extrémité saillante (560) fait saillie vers le haut d'une manière à ce qu'un bord périphérique supérieur (565) de l'orifice de sortie (563) inclut une forme d'arc convexe courbée vers le haut lorsque vu en vue en coupe.

6. Système de pile à combustible selon l'une quelconque des revendications 1 et 3 à 5, dans lequel l'orifice de sortie (563) de la partie d'extrémité saillante (560) inclut une partie inclinée (567a) inclinée par rapport à l'axe central (P1) et une partie (567c) s'étendant le long de l'axe central (P1).

7. Système de pile à combustible selon l'une quelconque des revendications 1 à 6, dans lequel la partie d'extrémité saillante (560) inclut une section transversale rectangulaire qui est perpendiculaire à l'axe central (P1).

8. Système de pile à combustible selon l'une quelconque des revendications 1 à 7, comprenant en outre :
un capot d'échappement (530) attaché à la chambre d'échappement (511) et incluant une première surface de mur (530f) faisant face au mur paravent (562) et une deuxième surface de mur (530d, 530s, 530u) s'entrecroisant avec la première surface de mur (530f), dans lequel
la deuxième surface de mur (530d, 530s, 530u) du capot d'échappement (530) est prévue avec un trou de communication d'air extérieur (512w) formé en une forme de petit trou.

9. Système de pile à combustible selon l'une quelconque des revendications 1 à 8, dans lequel la partie d'extrémité saillante (560) inclut une partie la plus distale (561), et un espace ([Delta]M) est prévu entre la partie la plus distale (561) et une surface de mur intérieur (520ui) d'un mur de surface supérieure (520u) de la boîte d'échappement (510).

10. Système de pile à combustible selon l'une quelconque des revendications 1 à 9, dans lequel
la boîte d'échappement (510) inclut un corps de boîte (520) incluant un mur (520r) qui fait face à l'orifice de sortie (563) et est formé avec un premier bord de lèvre (520ra) , et
le mur (520r) est lié au corps de boîte (520) de la boîte d'échappement (510) via le bord de lèvre (520ra).
